# EUROPÄISCHE PATENTSCHRIFT

(11) **EP 3 278 422 B1**
(45) Veröffentlichungstag und Bekanntmachung des Hinweises auf die Patenterteilung: **21.08.2019**
(21) Anmeldenummer: 16717830.0
(22) Anmeldetag: 21.03.2016
(51) Int. Cl.: H02K 15/03, H02K 1/02, H02K 1/27, H02K 15/12, H02K 1/04

(54) **PERMANENTMAGNETROTOR**
PERMANENT-MAGNET ROTOR
ROTOR À AIMANTS PERMANENTS

(30) Priorität: 02.04.2015 DE 102015206100
(43) Veröffentlichungstag der Anmeldung: 07.02.2018
(73) Patentinhaber: Bühler Motor GmbH, 90459 Nürnberg (DE)
(72) Erfinder: BERNREUTHER, Georg, 90449 Nürnberg (DE); AHRENS, Matthias, 90455 Nürnberg (DE); DIETRICH, Nikolaus, 90461 Nürnberg (DE); RICHTER, Olaf, 90547 Stein (DE); SCHEER, Arnold, 04275 Leipzig (DE)
(86) Internationale Anmeldenummer: PCT/DE2016/200146
(87) Internationale Veröffentlichungsnummer: WO 2016/155727

(56) Entgegenhaltungen:
- WO-A1-01/11756
- WO-A2-2013/104998
- WO-A2-2014/082840
- GB-A- 2 258 566
- JP-A- S61 128 754
- US-A- 4 777 397

## Beschreibung

Die Erfindung betrifft einen Permanentmagnetrotor (1) eines Elektromotors, bestehend aus einem Rückschlusskörper (2), einer Vielzahl von auf dem Umfang des Rückschlusskörpers (2) verteilten und mit Abstand voneinander angeordneten gesinterten Permanentmagneten (3), an welche eine mit hartmagnetischem Material gefüllte Kunststoffmasse (5) anschließt.

Aus der US 5,488,260 B1 ist ein Permanentmagnetrotor bekannt, bei dem auf einem Basiskörper bogenförmige Permanentmagnete angeordnet sind und durch ein mit Permanentmagnetmaterial gefülltes Kunststoff- oder Harzmaterial umspritzt sind. Die Herstellung von bogenförmigen Permanentmagneten ist nur mit erheblichen Aufwand mit ausreichender Maßgenauigkeit herstellbar. Maßnahmen zur Geräuschminderung durch eine spezielle Formgebung der Polflächen, z.B. Schränkungsnuten sind hiermit kaum möglich zumindest nicht mit vertretbarem Aufwand.

Aus der nächstliegenden WO 01/11756 A1 ist ein Permanentmagnetrotor eines Elektromotors, bestehend aus einem Rückschlusskörper, einer Vielzahl von auf dem Umfang des Rückschlusskörpers verteilten und mit Abstand voneinander angeordneten gesinterten Permanentmagneten, an welche eine Kunststoffmasse anschließt, wobei die Permanentmagnete plattenförmige bis quaderförmige Blockmagnete sind, bekannt.

Die GB 2 258 566 offenbart eine Kunststoffmasse die mit einem hartmagnetischen Material gefüllt ist, welches durch die Kraftwirkung der Magnete an deren Magnetfeldlinien ausgerichtet ist.

Aus der US 4 777 397 A ist ein Permanentmagnetrotor eines Elektromotors

Die WO 2013/104998 A2 offenbart einen weiteren Permanentmagnetrotor eines Elektromotors.

Aufgabe der vorliegenden Erfindung ist es daher bei einem gattungsgemäßen Permanentmagnetrotor dafür Sorge zu tragen, dass dieser einfach und wirtschaftlich herstellbar ist und zudem große Freiheitsgrade hinsichtlich der Gestaltung der Polflächen aufweist, wobei eine hohe Festigkeit und Sicherheit der mechanischen Verbindung zwischen den Permanentmagneten und dem Rückschlusskörper gewährleistet ist.

Diese Aufgabe wird erfindungsgemäß durch die Ansprüche 1 und 9 gelöst. Da die Permanentmagnete plattenförmige bis quaderförmige Blockmagnete sind, lassen sich diese mit geringem Aufwand sehr genau in großen Mengen schleifen. Durch die Ausrichtung des hartmagnetischen Materials der Kunststoffmasse an den Magnetfeldlinien der vormagnetisierten Permanentmagnete verstärken sich das Magnetfeld des Permanentmagnetrotors und damit der Wirkungsgrad des Elektromotors. Zudem sind Nuten in der Außenkontur der Kunststoffmasse vorgesehen.

Weiterbildungen der Erfindung werden nachfolgend anhand der Unteransprüche näher dargestellt.

Zweckmäßigerweise bildet die Kunststoffmasse eine zylindrische Außenkontur. Aufgrund von Geräuschreduzierungserfordernissen kann vorgesehen sein, dass die Kunststoffmasse eine Vielzahl von Abflachungen an der radialen Außenkontur aufweist.

Eine weitere Verbesserung des Rastmoments des Permanentmagnetrotors wird dadurch erreicht, dass die Nuten mit achsparallelen Linien auf der Außenkontur einen Schränkungswinkel bilden.

Zur Verbesserung der mechanischen Festigkeit ist vorgesehen, dass der Rückschlusskörper zwischen den voneinander beabstandeten Permanentmagneten radial ausgerichtete Vorsprünge aufweist, wobei diese Vorsprünge sich vorzugsweise radial nach außen verbreitern. Insbesondere sollen die Magnete jeweils breiter sein als die lichte Weite zwischen zwei benachbarten Vorsprüngen im radial außerhalb des von den Permanentmagneten eingenommenen Raumbereichs. Die Kunststoffmasse ist durch die Vorsprünge in eine Vielzahl von Raumbereichen aufgeteilt und geht mit den Vorsprüngen eine formschlüssige Verbindung ein, wobei diese eine schwalbenschwanzartige Kontur aufweisen.

Eine zweite Lösung der Aufgabe ergibt sich durch ein Verfahren zur Herstellung eines Permanentmagnetrotors. Dieses Verfahren umfasst die Verfahrensschritte: a) Bereitstellen eines Rückschlusskörpers; b) Anordnen von vormagnetisierten Permanentmagneten (3) auf dem Rückschlusskörper (2); c) Umspritzen des Rückschlusskörpers (2) und der Permanentmagnete (3) durch eine mit hartmagnetischem Material gefüllte Kunststoffmasse (5), wobei das hartmagnetische Material an den Magnetfeldern der vormagnetisierten Permanentmagnete (3) ausgerichtet wird.

Beispiele und Ausführungsbeispiele der Erfindung werden nachfolgend anhand der Zeichnung näher erläutert. Es zeigen:
Fig. 1a einen Axialschnitt eines Permanentmagnetrotors,
Fig. 1b einen Radialschnitt,
Fig. 2a einen Axialschnitt eines Permanentmagnetrotors,
Fig. 2b einen Radialschnitt,
Fig. 3a einen Axialschnitt einer ersten Ausführungsform eines Permanentmagnetrotors,
Fig. 3b einen Radialschnitt der ersten Ausführungsform,
Fig. 4a einen Axialschnitt eines Permanentmagnetrotors,
Fig. 4b einen Radialschnitt,
Fig. 5a einen Axialschnitt einer zweiten Ausführungsform eines Permanentmagnetrotors,
Fig. 5b einen Radialschnitt der zweiten Ausführungsform,
Fig. 6a einen Axialschnitt einer dritten Ausführungsform eines Permanentmagnetrotors und
Fig. 6b einen Radialschnitt der dritten Ausführungsform.

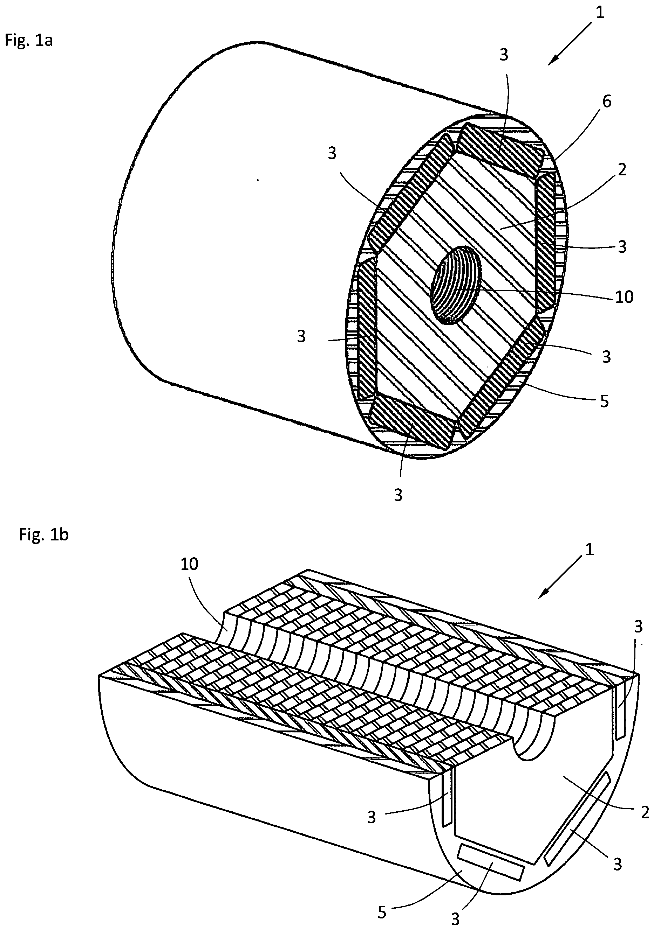

Fig. 1a zeigt einen Axialschnitt eines Permanentmagnetrotors 1, mit einem Rückschlusskörper 2, welcher aus einem Stapel von sechskantförmigen Elektroblechen besteht. Der Rückschlusskörper 2 weist zudem eine Wellenausnehmung 10 auf, welche zur Befestigung auf einer Rotorwelle dient. An die sechs Flächen des sechskantförmigen Blechpakets (Rückschlusskörper 2) schließen sich plattenförmige Permanentmagnete 3 an. Diese Permanentmagnete 3 sind von einer mit hartmagnetischem Material gefüllte Kunststoffmasse 5 umgeben, welche durch einen Urformvorgang gefügt ist. Während des Urformens sind die Permanentmagnete bereits vormagnetisiert, wodurch sich das hartmagnetische Material mit welchem die Kunststoffmasse gefüllt ist an den Magnetfeldlinien der Permanentmagnete ausrichtet. Die Außenkontur des Permanentmagnetrotors 1 wird hier vollumfänglich durch die Kunststoffmasse 5 gebildet und weist eine zylindermantelförmige Außenkontur 6 auf. Zwischen den Permanentmagneten verbleibt eine Lücke, welche durch die Kunststoffmasse 5 ausgefüllt ist. Fig. 1b zeigt einen Radialschnitt der ersten Ausführungsform, mit dem Rückschlusskörper 2, den Permanentmagneten 3, der Kunststoffmasse 5 und der Wellenausnehmung 10.

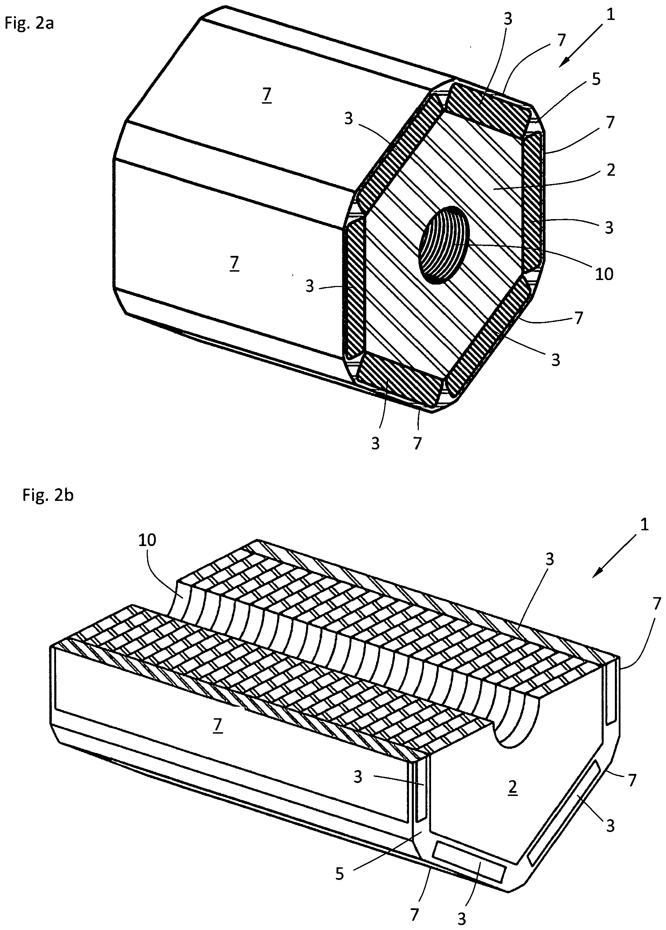

Fig. 2a zeigt einen Axialschnitt eines Permanentmagnetrotors 1, mit einem Rückschlusskörper 2, welcher aus einem Stapel von sechskantförmigen Elektroblechen besteht. Der Rückschlusskörper 2 weist zudem eine Wellenausnehmung 10 auf, welche zur Befestigung auf einer Rotorwelle dient. An die sechs Flächen des sechskantförmigen Blechpakets (Rückschlusskörper 2) schließen sich plattenförmige Permanentmagnete 3 an. Diese Permanentmagnete 3 sind von einer mit hartmagnetischem Material gefüllte Kunststoffmasse 5 umgeben, welche durch einen Urformvorgang gefügt ist. Während des Urformens sind die Permanentmagnete bereits vormagnetisiert, wodurch sich das hartmagnetische Material mit welchem die Kunststoffmasse gefüllt ist an den Magnetfeldlinien der Permanentmagnete ausrichtet. Die Außenkontur des Permanentmagnetrotors 1 wird hier vollumfänglich durch die Kunststoffmasse 5 gebildet und weist eine polygonartige Außenkontur auf. Zwischen den Permanentmagneten verbleibt eine Lücke, welche durch die Kunststoffmasse 5 ausgefüllt ist. Im Unterschied zu Fig. 1a sind hier Abflachungen 7 vorgesehen, welche parallel zu den Permanentmagneten 3 ausgerichtet sind. Fig. 2b zeigt einen Radialschnitt, mit dem Rückschlusskörper 2, den Permanentmagneten 3, der Kunststoffmasse 5, den Abflachungen 7 und der Wellenausnehmung 10.

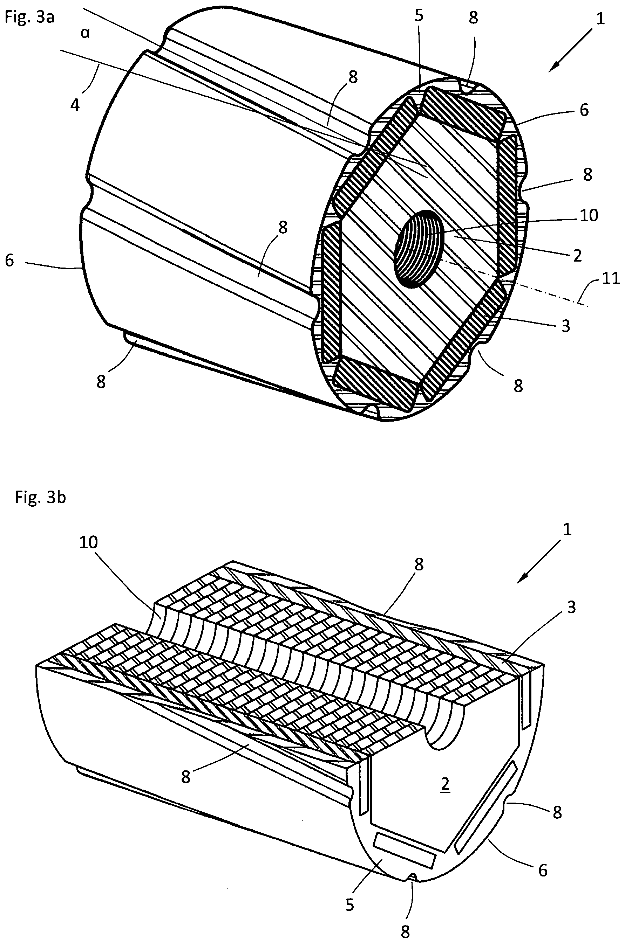

Fig. 3a zeigt einen Axialschnitt einer ersten Ausführungsform eines Permanentmagnetrotors 1, mit einem Rückschlusskörper 2, welcher aus einem Stapel von sechskantförmigen Elektroblechen besteht. Der Rückschlusskörper 2 weist zudem eine Wellenausnehmung 10 auf, welche zur Befestigung auf einer Rotorwelle dient und in welcher die Achse 11 des Permanentmagnetrotors 1 verläuft. An die sechs Flächen des sechskantförmigen Blechpakets (Rückschlusskörper 2) schließen sich plattenförmige Permanentmagnete 3 an. Diese Permanentmagnete 3 sind von einer mit hartmagnetischem Material gefüllte Kunststoffmasse 5 umgeben, welche durch einen Urformvorgang gefügt ist. Während des Urformens sind die Permanentmagnete bereits vormagnetisiert, wodurch sich das hartmagnetische Material mit welchem die Kunststoffmasse gefüllt ist an den Magnetfeldlinien der Permanentmagnete ausrichtet. Die Außenkontur des Permanentmagnetrotors 1 wird hier vollumfänglich durch die Kunststoffmasse 5 gebildet und weist eine partiell zylindermantelförmige Außenkontur 6 auf. Zwischen den Permanentmagneten verbleibt eine Lücke, welche durch die Kunststoffmasse 5 ausgefüllt ist. Es sind hier Nuten 8 vorgesehen, welche in Radialrichtung parallel zu den Permanentmagneten 3 ausgerichtet sind, aber einen Schränkungswinkel a mit achsparallelen Linien 4 aufweist. Fig. 3b zeigt einen Radialschnitt der ersten Ausführungsform, mit dem Rückschlusskörper 2, den Permanentmagneten 3, der Kunststoffmasse 5, den Nuten 8 und der Wellenausnehmung 10.

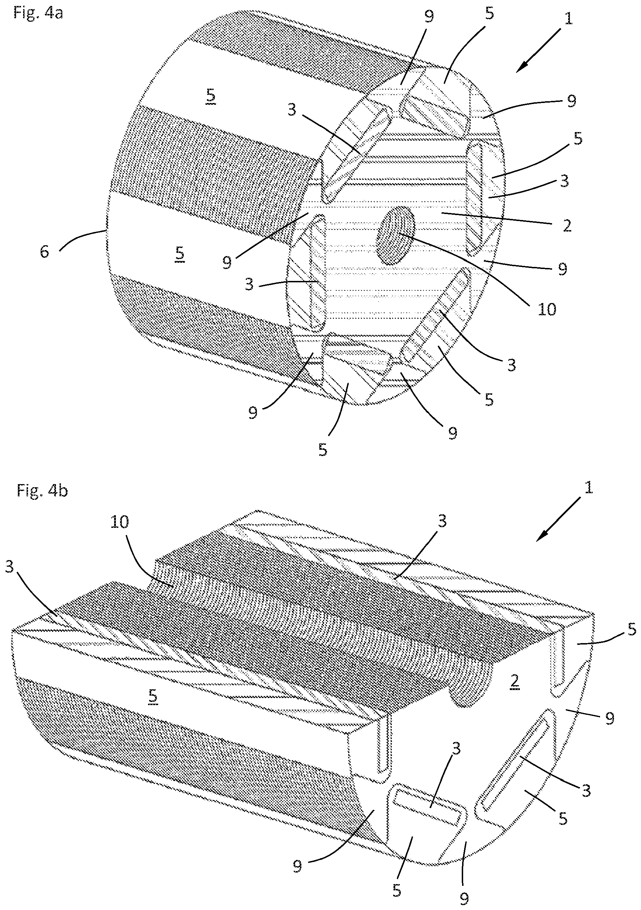

Fig. 4a zeigt einen Axialschnitt eines Permanentmagnetrotors 1, mit einem Rückschlusskörper 2, welcher aus einem Stapel von sternförmigen Elektroblechen besteht. Der Rückschlusskörper 2 weist zudem eine Wellenausnehmung 10 auf, welche zur Befestigung auf einer Rotorwelle dient. An das Blechpakets (Rückschlusskörper 2) schließen sich plattenförmige Permanentmagnete 3 an. An diese Permanentmagnete 3 schließen sich jeweils Volumenbereiche einer mit hartmagnetischem Material gefüllten Kunststoffmasse 5 an, welche durch einen Urformvorgang gefügt ist. Während des Urformens sind die

Permanentmagnete bereits vormagnetisiert, wodurch sich das hartmagnetische Material mit welchem die Kunststoffmasse gefüllt ist an den Magnetfeldlinien der Permanentmagnete ausrichtet. Die Außenkontur des Permanentmagnetrotors 1 wird teilweise von der Kunststoffmasse 5 und teilweise von Vorsprüngen 9 gebildet, die mit dem Rückschlusskörper 2 einstückig sind, wobei sie miteinander eine zylindermantelförmige Außenkontur 6 bilden. Die Kunststoffmasse 5 ist in eine der Anzahl der Permanentmagnete entsprechende Anzahl voneinander getrennter Raumbereiche aufgeteilt. Fig. 4b zeigt einen Radialschnitt, mit dem Rückschlusskörper 2, den Permanentmagneten 3, der Kunststoffmasse 5, den Vorsprüngen 9 und der Wellenausnehmung 10.

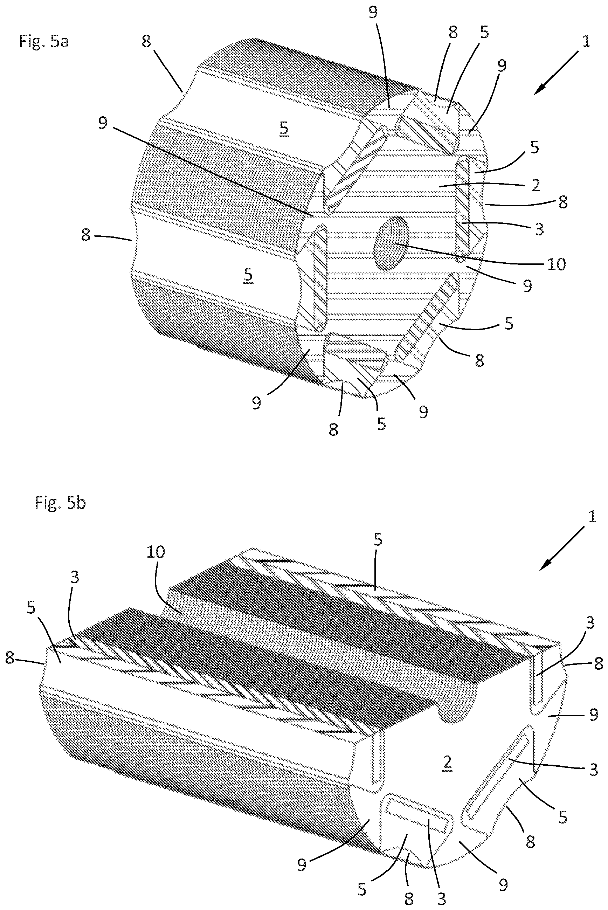

Fig. 5a zeigt einen Axialschnitt einer zweiten Ausführungsform eines Permanentmagnetrotors 1, mit einem Rückschlusskörper 2, welcher aus einem Stapel von sternförmigen Elektroblechen besteht. Der Rückschlusskörper 2 weist zudem eine Wellenausnehmung 10 auf, welche zur Befestigung auf einer Rotorwelle dient. An das Blechpakets (Rückschlusskörper 2) schließen sich plattenförmige Permanentmagnete 3 an. An diese Permanentmagnete 3 schließen sich jeweils Volumenbereiche einer mit hartmagnetischem Material gefüllten Kunststoffmasse 5 an, welche durch einen Urformvorgang gefügt ist. Während des Urformens sind die Permanentmagnete bereits vormagnetisiert, wodurch sich das hartmagnetische Material mit welchem die Kunststoffmasse 5 gefüllt ist an den Magnetfeldlinien der Permanentmagnete ausrichtet. Die Außenkontur des Permanentmagnetrotors 1 wird teilweise von der Kunststoffmasse 5 und teilweise von Vorsprüngen 9 gebildet, die mit dem Rückschlusskörper 2 einstückig sind. Die Kunststoffmasse 5 ist in eine der Anzahl der Permanentmagnete entsprechende Anzahl voneinander getrennter Raumbereiche aufgeteilt und weist achsparallele Nuten 8 auf. Fig. 5b zeigt einen Radialschnitt der zweiten Ausführungsform, mit dem Rückschlusskörper 2, den Permanentmagneten 3, der Kunststoffmasse 5, den Vorsprüngen 9, den Nuten 8 und der Wellenausnehmung 10.

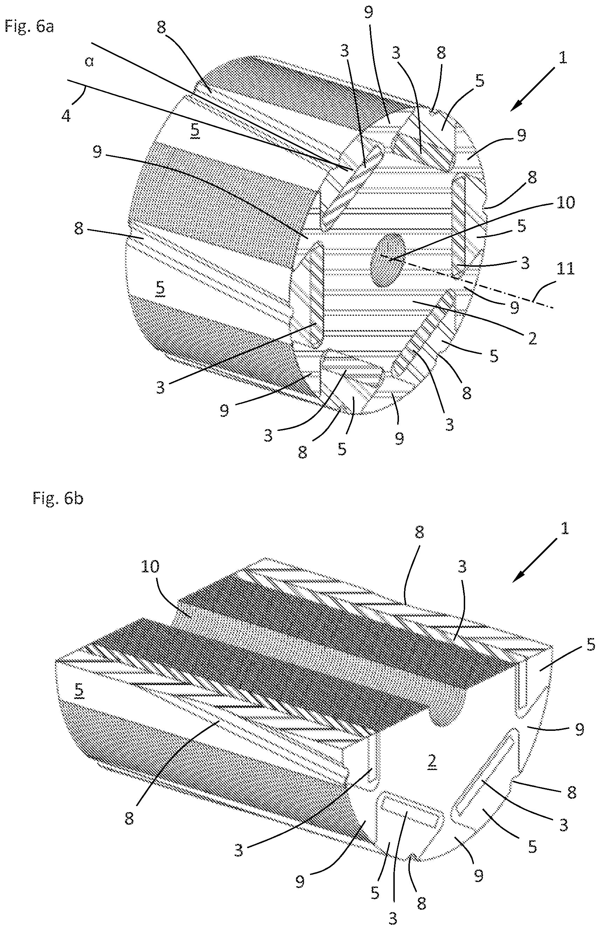

Fig. 6a zeigt einen Axialschnitt einer dritten Ausführungsform eines Permanentmagnetrotors 1, mit einem Rückschlusskörper 2, welcher aus einem Stapel von sternförmigen Elektroblechen besteht. Der Rückschlusskörper 2 weist zudem eine Wellenausnehmung 10 auf, welche zur Befestigung auf einer Rotorwelle dient. An das Blechpakets (Rückschlusskörper 2) schließen sich plattenförmige Permanentmagnete 3 an. An diese Permanentmagnete 3 schließen sich jeweils Volumenbereiche einer mit hartmagnetischem Material gefüllten Kunststoffmasse 5 an, welche durch einen Urformvorgang gefügt ist. Während des Urformens sind die Permanentmagnete bereits vormagnetisiert, wodurch sich das hartmagnetische Material mit welchem die Kunststoffmasse 5 gefüllt ist an den Magnetfeldlinien der Permanentmagnete ausrichtet. Die Außenkontur des Permanentmagnetrotors 1 wird teilweise von der Kunststoffmasse 5 und teilweise von Vorsprüngen 9 gebildet, die mit dem Rückschlusskörper 2 einstückig sind. Die Kunststoffmasse 5 ist in eine der Anzahl der Permanentmagnete entsprechende Anzahl voneinander getrennter Raumbereiche aufgeteilt und weist Nuten 8 auf. Im Gegensatz zur zweiten Ausführungsform sind die Nuten 8 gegenüber achsparallelen Linien 4 um einen Schränkungswinkel a geneigt. Fig. 6b zeigt einen Radialschnitt der dritten Ausführungsform, mit dem Rückschlusskörper 2, den Permanentmagneten 3, der Kunststoffmasse 5, den Vorsprüngen 9, den Nuten 8 und der Wellenausnehmung 10.

In den Figuren 1b, 2b, 3b, 4b, 5b und 6b ist weiter zu erkennen, dass sich die Füllmasse 5 partiell auch zwischen den Rückschlusskörper und den Permanentmagneten 3 erstreckt. Dies ist dadurch begründet, dass Kanten der Permanentmagnete abgerundet sind.

### Bezugszeichenliste

- 1: Permanentmagnetrotor
- 2: Rückschlusskörper
- 3: Magnet
- 4: achsparallele Linie
- 5: gefüllte Kunststoffmasse
- 6: Außenkontur
- 7: Abflachungen
- 8: Nuten
- 9: Vorsprünge
- 10: Wellenausnehmung
- 11: Achse

## Patentansprüche

1. Permanentmagnetrotor (1) eines Elektromotors, bestehend aus einem Rückschlusskörper (2), einer Vielzahl von auf dem Umfang des Rückschlusskörpers (2) verteilten und mit Abstand voneinander angeordneten gesinterten Permanentmagneten (3), wobei die Permanentmagnete (3) plattenförmige bis quaderförmige Blockmagnete sind, **dadurch gekennzeichnet, dass** an die Permanentmagnete (3) eine mit hartmagnetischem Material gefüllte Kunststoffmasse anschließt und das hartmagnetische Material in der Kunststoffmasse (5) durch die Kraftwirkung der Magnete (3) an deren Magnetfeldlinien ausgerichtet ist, wobei die Kunststoffmasse (5) in ihrer Außenkontur (6) Nuten (8) aufweist.

2. Permanentmagnetrotor nach Anspruch 1, **dadurch gekennzeichnet, dass** die Kunststoffmasse (5) eine zylindrische Außenkontur (6) bildet.

3. Permanentmagnetrotor nach Anspruch 1, **dadurch gekennzeichnet, dass** die Kunststoffmasse (5) eine Vielzahl von Abflachungen (7) an der radialen Außenkontur aufweist.

4. Permanentmagnetrotor nach Anspruch 1, **dadurch gekennzeichnet, dass** die Nuten (8) mit achsparallelen Linien auf der Außenkontur einen Schränkungswinkel bilden.

5. Permanentmagnetrotor nach Anspruch 1, **dadurch gekennzeichnet, dass** der Rückschlusskörper (2) zwischen den voneinander beabstandeten Magneten (3) radial ausgerichtete Vorsprünge (9) aufweist.

6. Permanentmagnetrotor nach Anspruch 5, **dadurch gekennzeichnet, dass** sich die Vorsprünge (9) radial nach außen verbreitern.

7. Permanentmagnetrotor nach Anspruch 6, **dadurch gekennzeichnet, dass** die Permanentmagnete (3) jeweils breiter als die lichte Weite zwischen zwei benachbarten Vorsprüngen (9) im radial außerhalb des von den Magneten (3) eingenommenen Raumbereich sind.

8. Permanentmagnetrotor nach Anspruch 5,6 oder 7, **dadurch gekennzeichnet, dass** die Kunststoffmasse (5) durch die Vorsprünge (9) in eine Vielzahl von Raumbereichen aufgeteilt ist und mit den Vorsprüngen (9) eine formschlüssige Verbindung eingeht.

9. Verfahren zur Herstellung eines Permanentmagnetrotors nach einem der Ansprüche 1-8, **gekennzeichnet durch** folgende Verfahrensschritte: a) Bereitstellen eines Rückschlusskörpers; b) Anordnen von vormagnetisierten Permanentmagneten (3) auf dem Rückschlusskörper (2); c) Umspritzen des Rückschlusskörpers (2) mit den Permanentmagneten (3) durch eine mit hartmagnetischem Material gefüllte Kunststoffmasse (5), wobei das hartmagnetische Material an den Magnetfeldlinien der vormagnetisierten Permanentmagnete (3) ausgerichtet wird.

## Claims

1. A permanent magnet rotor (1) of an electric motor, consisting of a yoke body (2), a plurality of sintered permanent magnets (3) distributed over the circumference of the yoke body (2) and arranged at a distance from one another, wherein the permanent magnets (3) are plate-shaped to cuboid block magnets, **characterized in that** adjoining the permanent magnets (3) there is a plastics mass filled with magnetically hard material and the magnetically hard material in the plastics mass (5) is by the force action of the magnets (3) oriented on their magnetic field lines, wherein the plastics mass (5) has grooves (8) in its external contour (6).

2. A permanent magnet rotor according to claim 1, **characterized in that** the plastics mass (5) forms a cylindrical external contour (6).

3. A permanent magnet rotor according to claim 1, **characterized in that** the plastics mass (5) has a plurality of flat portions (7) at the radial external contour.

4. A permanent magnet rotor according to claim 1, **characterized in that** the grooves (8) form an angle of inclination with axially-parallel lines on the external contour.

5. A permanent magnet rotor according to claim 1, **characterized in that** the yoke body (2) has radially oriented projections (9) between the spaced-apart magnets (3).

6. A permanent magnet rotor according to claim 5, **characterized in that** the projections (9) widen radially outwards.

7. A permanent magnet rotor according to claim 6, **characterized in that** the permanent magnets (3) are each wider than the clear width between two adjacent projections (9) in the space region occupied radially outside of the magnets (3).

8. A permanent magnet rotor according to claim 5, 6 or 7, **characterized in that** the plastics mass (5) is divided into a plurality of space regions by the projections (9) and forms a form-locked connection with the projections (9).

9. A method of producing a permanent magnet rotor according to any one of claims 1-8, **characterized by** the following process steps: a) provision of a yoke body; b) arrangement of premagnetised permanent magnets (3) on the yoke body (2); c) extrusion-coating of the yoke body (2) with the permanent magnets (3) by a plastics mass (5) filled with magnetically hard material, wherein the magnetically hard material is oriented on the magnetic field lines of the premagnetised permanent magnets (3).

## Revendications

1. Rotor à aimants permanents (1) d'un moteur électrique, constitué d'un corps de retour magnétique (2), d'une pluralité d'aimants permanents (3) frittés, répartis sur la périphérie du corps de retour magnétique (2) et agencés à distance les uns des autres, les aimants permanents (3) étant des aimants en bloc présentant une forme de plaque pouvant aller jusqu'à une forme parallélépipédique, **caractérisé en ce qu'**aux aimants permanents (3) se raccorde une masse de matière plastique renfermant des charges de matériau magnétique dur, et le matériau magnétique dur dans la masse de matière plastique (5) est, par l'action de la force des aimants (3), orienté conformément à leurs lignes de champ magnétique, la masse de matière plastique (5) présentant des rainures (8) dans son contour extérieur (6).

2. Rotor à aimants permanents selon la revendication 1, **caractérisé en ce que** la masse de matière plastique (5) forme un contour extérieur (6) cylindrique.

3. Rotor à aimants permanents selon la revendication 1, **caractérisé en ce que** la masse de matière plastique (5) présente une pluralité de méplats (7) sur le contour extérieur radial.

4. Rotor à aimants permanents selon la revendication 1, **caractérisé en ce que** les rainures (8) forment un angle d'obliquité avec des lignes parallèles à l'axe sur le contour extérieur.

5. Rotor à aimants permanents selon la revendication 1, **caractérisé en ce que** le corps de retour magnétique (2) présente, entre les aimants (3) espacés les uns des autres, des protubérances (9) d'orientation radiale.

6. Rotor à aimants permanents selon la revendication 5, **caractérisé en ce que** les protubérances (9) s'élargissent radialement vers l'extérieur.

7. Rotor à aimants permanents selon la revendication 6, **caractérisé en ce que** les aimants permanents (3) sont chacun respectivement plus larges que la largeur libre entre deux protubérances (9) voisines, radialement à l'extérieur de la zone spatiale occupée par les aimants (3) .

8. Rotor à aimants permanents selon la revendication 5, 6 ou la revendication 7, **caractérisé en ce que** la masse de matière plastique (5) est subdivisée, par les protubérances (9), en une pluralité de zones spatiales, et réalise, avec les protubérances (9), une liaison par complémentarité de formes.

9. Procédé pour la fabrication d'un rotor à aimants permanents selon l'une des revendications 1-8, **caractérisé par** les étapes de procédé suivantes : a) fourniture et préparation d'un corps de retour magnétique ; b) agencement d'aimants permanents (3) pré-magnétisés sur le corps de retour magnétique (2) ; c) moulage par injection d'une masse de matière plastique (5) renfermant des charges de matériau magnétique dur, autour du corps de retour magnétique (2) avec ses aimants permanents (3), le matériau magnétique dur s'orientant à cette occasion, conformément aux lignes de champ magnétique des aimants permanents (3) pré-magnétisés.
